# EUROPÄISCHE PATENTSCHRIFT

(11) **EP 0 931 326 B1**
(45) Veröffentlichungstag und Bekanntmachung des Hinweises auf die Patenterteilung: **17.05.2000**
(21) Anmeldenummer: 97918903.2
(22) Anmeldetag: 25.08.1997
(51) Int. Cl.: H01G 4/236

(54) **VERFAHREN ZUR HERSTELLUNG EINES KONDENSATORS MIT KLEINER EIGENINDUKTIVITÄT**
METHOD FOR MANUFACTURING A LOW SELF-INDUCTANCE CAPACITOR
PROCEDE DE FABRICATION D'UN CONDENSATEUR A FAIBLE INDUCTANCE PROPRE

(30) Priorität: 27.09.1996 DE 19639882
(43) Veröffentlichungstag der Anmeldung: 28.07.1999
(73) Patentinhaber: EPCOS AG, 81541 München (DE)
(72) Erfinder: VETTER, Harald, D-89520 Heidenheim (DE); BERG, Ludwig, D-89522 Heidenheim (DE)
(74) Vertreter: Epping, Wilhelm, Dr.-Ing.
(86) Internationale Anmeldenummer: DE9701846
(87) Internationale Veröffentlichungsnummer: WO9813840

(56) Entgegenhaltungen:
- EP-A- 0 598 256
- DE-C- 752 651

## Beschreibung

Die Erfindung betrifft ein Verfahren zur Herstellung eines in ein Gehäuse eingebauten elektrischen Kondensators mit kleiner Eigeninduktivität, bei dem die Verschaltung zwischen Kondensatoranschlußelementen und Durchführungen mittels Litzen vorgenommen wird.

Kondensatoren, insbesondere Leistungselektronikkondensatoren mit extrem reduzierter Eigeninduktivität sind seit längerer Zeit allgemein bekannt. So ist zum Beispiel aus der EP 05 98 256 A1 ein radialer GTO-Beschaltungskondensator bekannt, der aus einem niederinduktivem Kondensatorwickel besteht, der mit möglichst kleinem Leitungsabstand zu den Anschlußelementen (Durchführungen) in ein Gehäuse eingebaut ist.

Im Zuge der Halbleiterentwicklung wird eine weitere Reduzierung der Eigeninduktivitätswerte, insbesondere von Großkondensatoren im Rechteckgehäuse (zum Beispiel für den Einsatz in Zwischenkreisbatterien) auf Werte ≤50 nH gefordert. Diese extrem geringen Werte lassen sich unter anderem nur durch einen minimierten Leitungsabstand vom fertiggeschaltetem Wickelstapel zum Anschlußelement (Durchführung) und durch eine Steigerung der Teilkapazitätsanzahl pro Kondensatorgehäuse mit der damit verknüpften Durchführungsanzahl erreichen.

Zur Zeit werden Kondensatoren mit vier bis sechs Durchführungen (das heißt zwei bis drei parallel geschaltete Teilkondensatoren) hergestellt. Dieser Lösungsansatz zur Reduzierung der Kondensatoreigeninduktivität fordert aber eine sehr hohe Maßhaltigkeit der einzelnen Konstruktionselemente im Anschlußbereich des Kondensators.
Verschärft wird die Situation durch die fallweise Notwendigkeit, zum Beispiel den Kondensatordeckel mit den Durchführungen als vorkomplettiertes Teil in Einsatz zu bringen und den Kondensatoreinbau, bestehend aus fertigverschalteten und isolierten Wickelstapeln in der Regel vom Gehäuseboden her "über Kopf" in das Gehäuse einzuschieben, da der Kondensatordeckel aus prozeßtechnischen Gründen im allgemeinen bei diesen Konstruktionsvarianten bereits fertig eingeschweißt bei der Endmontage vorliegen muß.

Aus den angeführten Gründen entsteht zwingend die Forderung, die einzelnen Anschlußbolzen des Kondensatorpakets sehr präzise einfädeln zu müssen. Dieses Verfahren ist naturgemäß aufwendig und bringt Gefahren im Zusammenhang mit der mechanischen Stabilität der einzelnen Konstruktionselemente (zum Beispiel Anschlußbolzen und Durchführungen) mit sich.

Die Möglichkeit, Kondensatorpakete in Einzelstapel aufzutrennen, um so "nur" zwei Anschlußbolzen vom Boden her in die deckelseitigen Durchführungsbohrungen einführen zu müssen, entspannt die Maß- und Montageprobleme nur bedingt.

Es ist daher versucht worden, mit flexiblen Anschlußleitungen (Litzen) die Verbindung vom Kondensatoreinbau zu den Durchführungen herzustellen. Bei dieser konstruktiven Ausgestaltung eines niederinduktiven Leistungskondensators werden die Wickelstapel über Litzen kontaktiert, die anschließend über die Bohrung der Durchführung eingefädelt und dicht gelötet werden. Die Schwierigkeiten bei dieser Ausführungsform bestehen darin, daß die Eigeninduktivität im Bereich des Wickelstapelendes bedeutend größer ist als bei einer Verschaltung gemäß dem weiter oben angeführten Stand der Technik. Die geschilderte Ausführungsform mit Litzenverbindung ist auch aufwendiger (und damit teurer) in der Herstellung, da zum Einfädeln in den Deckelbereich fallweise eine große Litzenmenge benötigt wird, die vor oder nach dem Dichtlöten der Durchführungen entfernt werden muß und somit nur noch als Abfall entsorgt werden kann.

Aufgabe der vorliegenden Erfindung ist es, ein kostengünstiges Verfahren anzugeben, das eine sehr kurze und damit extrem niederinduktive Anbindung zwischen einem oder mehreren Kondensatorwickelstapeln und entsprechend einer oder mehrerer Durchführungen unter Verwendung von Litzen ermöglicht.

Diese Aufgabe wird erfindungsgemäß dadurch gelöst, daß Litzen mit im wesentlichen kreisförmigem Querschnitt verwendet werden, und daß die Litzen vor der Einführung in die Durchführungen zumindest in einem in den Durchführungen anzuordnenden Ende zentrisch verdichtet werden.

Vorteilhafte Ausgestaltungen des Gegenstandes der Erfindung sind in den Unteransprüchen angeführt.

Die Erfindung wird im folgenden anhand von Ausführungsbeispielen erläutert.

In der dazugehörenden Zeichnung zeigen:
- Fig.1: eine in einer Durchführung angeordnete Litze,
- Fig.2: eine in ein Kondensatoranschlußteil eingenietete Litze und
- Fig.3: ein flanschförmig ausgebildetes Teil.

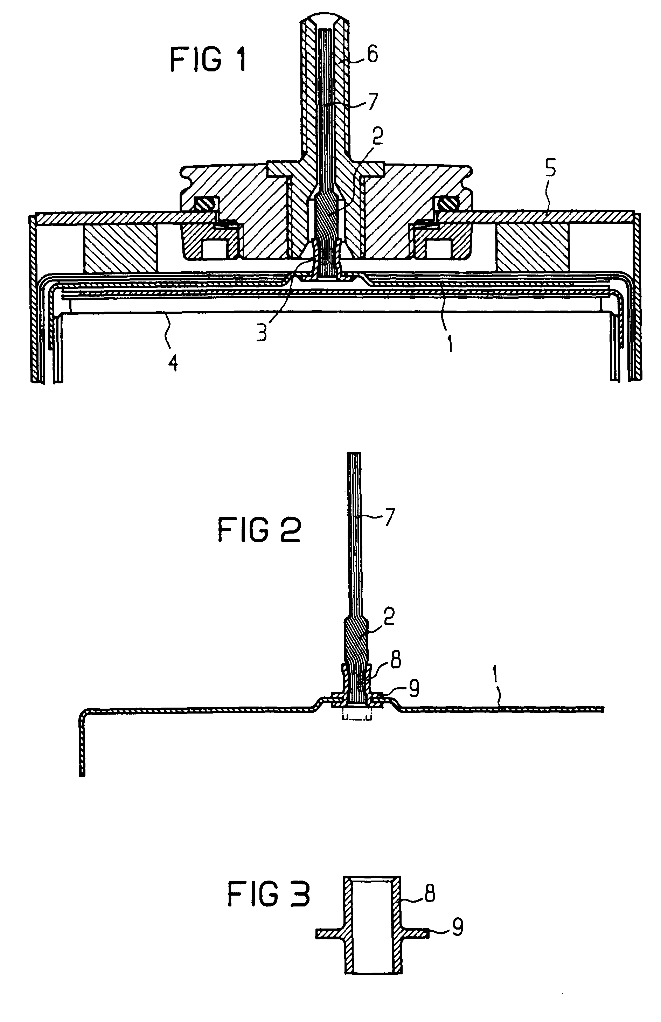

In der Fig. 1 ist ein Kondensatoranschlußelement 1 dargestellt, in das eine Litze 2 eingesetzt ist. Die Litze 2 ist analog zu einer Kabelschuhmontage (zum Beispiel mit Sechskantquetschung) mittels eines entsprechend geformten Anschlußteils 3 in das Anschlußelement 1 eingepreßt. Anschließend kann eine Verlötung zwischen Litze 2 und Kondensatoranschlußelement 1 erfolgen. Nach Endmontage beziehungsweise Kompletteinbau des Wickelstapels 4 stehen zwei flexible, kurze Litzenstücke zur Verfügung, die bodenseitig bereits fertig mit dem Kondensatoranschlußelement 1 verbunden sind.

Der endmontierte Wickelstapel 4 wird nun bodenseitig an das Gehäuse mit dem bereits eingeschweißten und vorbereiteten Gehäusedeckel 5 mit den darin angeordneten Durchführungen 6 plaziert. Dabei wird die Litze 2 mit einem zentrisch verdichteten oberen Ende 7 in die Bohrungen der Durchführungen eingefädelt und anschließend der Wickelstapel 4 (beziehungsweise der Kompletteinbau) in das Gehäuse eingeschoben. Zur besseren Handhabung kann in dem zentrisch verdichteten Ende 7 ein Einfädelungsdraht angeordnet sein, wodurch das Einführen und Nachziehen der Litze 2 verbessert werden kann. Im nächsten Arbeitsschritt wird dann das verdichtete Ende 7 der Litze 2 in der Durchführung 6 dichtgelötet, wobei gegebenenfalls auch noch eine Verquetschung vorgenommen werden kann.

In der Fig. 2 ist eine weitere Ausführungsform dargestellt, bei der die Litze 2 mittels eines flanschartig ausgebildeten Teils 8 einseitig mit der am gegenüberliegenden Ende 7 verdichteten Litze 2 bestückt und verquetscht wird. Das derart vorkonfektionierte Litzenstück wird in das Kondensatoranschlußelement 1 eingenietet, wobei eine in Fig. 3 dargestellte Stufe 9 dafür sorgt, daß trotz Nietung an der Oberseite des Kondensatoranschlußelements 1 ein ausreichend bemessener Lötspalt für die Verlötung des Teils 8 beziehungsweise der Litze 2 verbleibt.

Den oben angeführten Ausführungsbeispielen ist zu entnehmen, daß eine in einem Endbereich 7 vorverdichtete Litze 2 im Einfädelungsbereich der Durchführung 6 derart formstabilisiert ist, daß mit beziehungsweise gegebenenfalls ohne Einfädelungsdraht eine Montage mit vorkomplettierten Gehäusedeckeln 5 ohne nennenswerte Maßprobleme ermöglicht wird. Hierdurch wird eine kostengünstige Herstellung eines Kondensator mit niedriger Eigeninduktivität ermöglicht.

Die unverdichtete Zone der Litze 2 ist zwar verhältnismäßig kurz, kann aber trotzdem sozusagen eine "Kardangelenkfunktion" übernehmen, wodurch gewährleistet wird, daß deutlich geringere Anforderungen an die Maßhaltigkeit der Konstruktionselemente des Kondensators möglich werden. Zusätzlich wird ein größerer Litzendurchmesser beziehungsweise -querschnitt realisiert als dies ohne Verdichtung der Fall wäre. Dies bedeutet, daß relativ höhere Stromstärken als bei einer Ausführung ohne Verdichtung möglich werden. Dieser Effekt ist bei den pro Bauteil tendenziell steigenden Stromstärken wesentlich.

Insbesondere gestattet der Gegenstand der Erfindung auch die schwierige Variante der "Überkopfmontage" des Wickelstapels 4 bei eingeschweißtem Deckel 5 mit mehreren Durchführungen 6 auch ohne Einfädelungsdraht zu beherrschen.

Besonders vorteilhaft ist die vorgeschlagene Lösung im Anschlußbereich eines Kondensators bei hochfrequenten Stromanteilen, weil sich hierbei eine thermische Entlastung der Durchführungen ergibt.

## Patentansprüche

1. Verfahren zur Herstellung eines in ein Gehäuse eingebauten elektrischen Kondensators mit kleiner Eigeninduktivität, bei dem die Verschaltung zwischen Kondensatoranschlußelementen und Durchführungen mittels Litzen vorgenommen wird,
**dadurch gekennzeichnet,**
daß Litzen (2) mit im wesentlichen kreisförmigem Querschnitt verwendet werden, und daß die Litzen (2) vor der Einführung in die Durchführungen (6) zumindest in einem in den Durchführungen (6) angeordneten Endbereich (7) zentrisch verdichtet werden.

2. Verfahren nach Anspruch 1,
**dadurch gekennzeichnet,**
daß vor der Verdichtung ein als Einfädelhilfe dienender Draht im Zentrum der Litzen (2) im Bereich des Endes (7) angeordnet wird.

3. Verfahren nach Anspruch 1 oder 2,
**dadurch gekennzeichnet,**
daß vor dem Einbau der Litze (2) in das Kondensatoranschlußelement (1) auch dieses Ende der Litze zentrisch verdichtet wird.

4. Verfahren nach einem der Ansprüche 1 bis 3,
**dadurch gekennzeichnet,**
daß zum Einbau der Litze (2) in das Kondensatoranschlußelement (1) ein flanschförmig ausgebildetes Teil (8) verwendet wird, das mit dem Litzenende verquetscht und mit dem Kondensatoranschlußelement (1) vernietet wird.

5. Verfahren nach Anspruch 4,
**dadurch gekennzeichnet,**
daß das Kondensatoranschlußelement (1) vernietet wird, und daß das flanschförmig ausgebildete Teil (8) mit dem Kondensatoranschlußelement (1) zusätzlich verlötet wird.

## Claims

1. Method for producing an electrical capacitor, installed in a container, of low self-inductance, in which litz wires interconnect the capacitor connection elements and bushings, characterized in that use is made of litz wires (2) with an essentially circular cross-section, and in that before being inserted into the bushings (6) the litz wires (2) are centrally compacted at least at an end region (7) arranged in the bushings (6).

2. Method according to Claim 1, characterized in that before the compaction a wire serving as a threading aid is arranged in the centre of the litz wires (2) in the region of the end (7).

3. Method according to Claim 1 or 2, characterized in that before the litz wire (2) is installed in the capacitor connection element (1), this end of the litz wire is also centrally compacted.

4. Method according to one of Claims 1 to 3, characterized in that for the purpose of installing the litz wire (2) in the capacitor connection element (1), use is made of a part (8) which is of flange-shaped construction, is crimped to the end of the litz wire, and is riveted to the capacitor connection element (1).

5. Method according to Claim 4, characterized in that the capacitor connection element (1) is riveted, and in that the part (8) of flange-shaped construction is additionally soldered to the capacitor connection element (1) .

## Revendications

1. Procédé de fabrication d'un condensateur électrique à petite inductance propre inséré dans un boîtier, dans lequel on effectue le câblage entre les éléments de raccordement de condensateur et les traversées au moyen de torons, caractérisé en ce que l'on utilise des torons (2) de section transversale sensiblement circulaire et en ce que l'on comprime de manière centrée les torons (2) avant l'introduction dans les traversées (6) au moins dans une zone (7) d'extrémité disposée dans les traversées (6).

2. Procédé suivant la revendication 1, caractérisé en ce que l'on monte avant la compression un fil métallique servant à faciliter à l'enfilage au centre des torons (2) dans la zone de l'extrémité (7).

3. Procédé suivant la revendication 1 ou 2, caractérisé en ce que, avant l'insertion des torons (2) dans l'élément (1) de raccordement de condensateur, on comprime de manière centrée aussi cette extrémité du toron.

4. Procédé suivant l'une des revendications 1 à 3, caractérisé en ce que l'on utilise pour insérer le toron (2) dans l'élément (1) de raccordement de condensateur une pièce (8) qui est réalisée en forme de flasque, dans laquelle l'extrémité des torons est écrasée et qui est rivetée à l'élément (1) de raccordement de condensateur.

5. Procédé suivant la revendication 4, caractérisé en ce que l'on rivette l'élément (1) de raccordement de condensateur et en ce que de plus l'on brase la pièce (8) réalisée en forme de flasque à l'élément (1) de raccordement de condensateur.
